# EUROPEAN PATENT APPLICATION

(11) **EP 2 120 410 A1**
(43) Date of publication of application: **18.11.2009**
(21) Application number: 09160000.7
(22) Date of filing: 12.05.2009
(51) Int. Cl.: H04L 12/58

(54) **Method and device for storing and transmitting messages**

(30) Priority: 12.05.2008 CN 200810096956; 20.03.2009 WO PCT/CN2009/070924
(71) Applicant: Huawei Technologies Co., Ltd., Longgang District Shenzhen Guangdong 518129 (CN)
(72) Inventor: Li, Xiaoqiang, 518129, Shenzhen (CN); Han, Weizheng, 518129, Shenzhen (CN); Chen, Kahua, 518129, Shenzhen (CN); Cheng, Weiming, 518129, Shenzhen (CN)
(74) Representative: Thun, Clemens

(57) **Abstract**

The present invention discloses a message storage method, including: receiving a new message including message contents and service information (A1); checking whether a seed message of the new message is stored (A2), the seed message being a message with identical message contents to the new message; and creating an association relationship between the service information of the new message and the stored seed message (A3), if a seed message of the new message is stored; and storing the received new message (A4), if no seed message of the new message is stored.

## Description

This application claims the priorities to Chinese Patent Application No. 200810096956.0, filed with the Chinese Patent Office on May 12, 2008 and entitled "METHOD AND DEVICE FOR STORING AND TRANSMITTING MESSAGES", and an International Application PCT/CN2009/070924 filed on March 20, 2009, the contents of which are hereby incorporated by reference in their entireties.

### Field of the Invention

The present invention relates to the field of communication technologies and in particular to a method and a device for storing and transmitting messages.

### Background of the Invention

At present, message-type services of the IT industry are widely applied, for example, telecommunication-level services like Short Messaging Services (SMS), Multimedia Messaging Services (MMS), Instant Messaging and Presence Services (IMPS), and services over the Internet like MSN, QQ, Email, etc., and have attracted a large number of users due to its possession of huge groups of users, flexible communication means and abundant expression modes. These applications are substantially similar in terms of communication modes though their real-time degrees differ. For example, you can transmit conveniently a message (the message referred to in this context generally means data transmission media) to one of your friends or concurrently to many friends.

As mentioned above, a server processing such services delivers messages to a receiving user in response to a request of a transmitting user, and if the receiving user requires permanent storage thereof (e.g., Email) or fails to extract it (e.g., MMS) or requires extraction thereof later or transfer thereof for storage, then the server has to store these messages temporarily or permanently.

A message storage method in the prior art is presented below, which includes the following steps:

A transmitter A transmits a message to a message server with a destination address being a user B;

The message server stores and then sends the message to the user B.

A process in which the transmitter A transmits an identical message to a user C is identical to that of transmitting a message to the user B.

The messages transmitted from the same transmitter to a plurality of receivers can be stored respectively for the plurality of receivers by the message server.

There is another method for storing a message transmitted to a group of users in the prior art. In the prior art, a plurality of messages transmitted from the same transmitter are stored respectively, for example, the transmitter A transmits to the message server a message with destination addresses being the user B and the user C to transmit the message respectively to the two users (the user B and the user C), and the message server also stores the transmitted messages respectively for the user B and the user C.

### Summary of the Invention

An embodiment of the present invention provides a message storage method and a message transmission method and device, which can improve storage capability of a message server.

An embodiment of the present invention provides a message storage method, including:
receiving a new message including message contents and service information;
checking whether a seed message of the new message is stored, where a seed message is a message with identical message contents to the new message; and
creating an association relationship between the service information of the new message and the stored seed message, if the seed message of the new message is stored; or
storing the received new message, if no seed message of the new message is stored.

An embodiment of the present invention provides a message transmission method, including:
receiving a new message including message contents and service information;
checking whether a seed message of the new message is stored, where a send message is a message with identical message contents to the new message; and
creating an association relationship between the service information of the new message and the seed message, and transmitting the message contents of the seed message to a destination of the new message, if there is a seed message of the new message; or
storing the received new message, and transmitting the message contents of the new message to the destination of the new message, if there is no seed message.

An embodiment of the present invention provides a message transmission method, including:
receiving a new message including message contents and service information;
checking whether a seed message of the new message is stored, where a send message is a message with identical message contents to the new message; and
creating an association relationship between the service information of the new message and the seed message, and transmitting the message contents of the seed message to a destination of the new message, if there is a seed message of the new message; or
storing the received new message, and transmitting the message contents of the new message to the destination of the new message, if there is no seed message.

An embodiment of the present invention provides a message server, including a message reception unit, a seed check unit, an association relationship creation unit and a message storage unit, wherein:
the message reception unit is adapted to receive a new message including message contents and service information;
the seed check unit is adapted to check whether a seed message of the new message is stored locally, where a send message is a message with identical message contents to the new message;
the association relationship creation unit is adapted to create an association relationship between the service information of the new message and a seed message of the new message when the seed message is present as a result of the check by the seed check unit; and
the message storage unit is adapted to store the received new message when there is no seed message of the new message as a result of the check by the seed check unit.

With the above technical solutions, advantageous technical effects of the embodiments of the present invention are as follows:

In the message storage solution according to the embodiment of the present invention, only one copy of identical message contents of a plurality of messages is stored while storing respectively the individualized information occupying a very small space, and the individualized information and the message contents are linked by a unique identifier. Compared with respective storage of all messages for receivers of the messages in the prior art, according to the embodiments of the present invention, the storage capability of a message server memory can be improved, and an input and output load of the system can be lowered while saving a hardware cost of the message server.

### Brief Description of the Drawings

Figure 1 is a flow chart of a message storage method according to an embodiment of the present invention;

Figure 2 is a flow chart of a message storage method according to another embodiment of the present invention;

Figure 3 is a flow chart of a message transmission method according to an embodiment of the present invention;

Figure 4 is a flow chart of a message processing method according to an embodiment of the present invention;

Figure 5 is a flow chart of a message processing method according to another embodiment of the present invention;

Figure 6 is a schematic structural diagram of a message server according to an embodiment of the present invention; and

Figure 7 is a schematic structural diagram of a message server according to another embodiment of the present invention.

### Detailed Description of the Embodiments

Embodiments of the present invention provide a message storage method and a message transmission method and device, which can improve the storage capability of a message server.

The message storage method and the message transmission method and device according to the embodiments of the present invention will be described hereinafter.

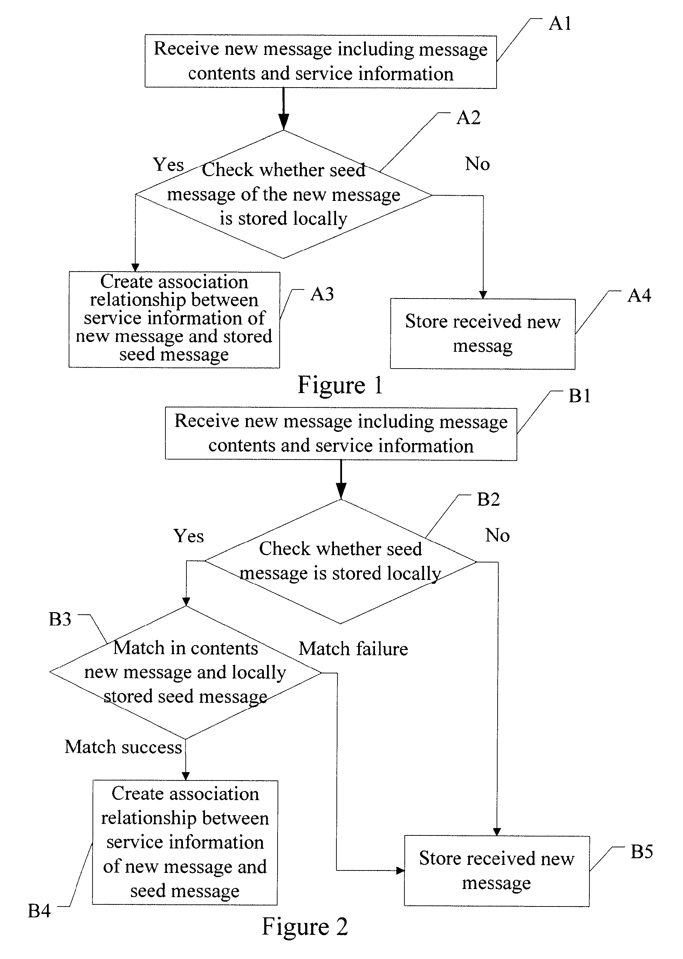

A message storage method is provided in an embodiment of the present invention. A flow chart of the method is as illustrated in Figure 1, and the method includes the following steps:

A1. A new message including message contents and service information is received.

In the embodiments of the present invention, the message includes two parts: message content and service information. The message content is actual information transmitted from a transmitter, and the service information represents various auxiliary communication parameters such as a service type, transmitter and receiver addresses of the message.

A2. It is checked whether a seed message of the new message is stored locally, and if it is stored, then the flow proceeds to step A3; otherwise, the flow proceeds to step A4. The seed message is a message with identical message contents to the new message.

In the embodiments of the present invention, only one copy of message contents is stored for a plurality of messages with identical contents from the same transmitter to different receivers while storing the service information of each of the messages respectively. In other words, the identical parts in the plurality of messages will not be stored repeatedly, but only one copy thereof is stored and an association relationship thereof with the plurality of various pieces of service information is created. The locally stored message for sharing among other messages is referred to as a seed message. Thus, a storage space can be reduced greatly.

A3. An association relationship between the service information of the new message and the stored seed message is created.

In the present embodiment, the association relationship between the service information of the new message and the stored seed message is created particularly by creating an association relationship between the service information of the new message and a content identifier of the seed message, where the content identifier corresponds uniquely to the seed message.

It may be appreciated that the association relationship between the service information of the new message and the seed message can be created in various existing approaches, for example, by associating directly the new message and an address where the seed message is stored. It is emphasized in the present embodiment that the seed message can be located by the service information of the new message and furthermore the message contents thereof can be extracted in any specific approach without limiting the present invention.

### A4. The received new message is stored.

In the present embodiment, if no seed message of the new message is stored as a result of the check in step A2, then the flow further includes the following step:

It is determined whether the message is qualified as a seed message, and if it is qualified, then the message serves as the seed message while generating a unique content identifier of the message.

In the message storage solution according to the embodiments of the present invention, only one copy of identical message contents of a plurality of messages is stored while storing respectively the individualized information occupying a very small space, and the individualized information and the message contents are linked by a unique identifier. Compared with respective storage of all messages for receivers of the messages in the prior art, according to the embodiments of the present invention, both the storage space and storage time can be conserved, the storage capability of a message server memory can be improved greatly, and an input and output (I/O) load of the system can be reduced. Further, requirements for hardware processing capability of the message server are lowered, and thereby hardware costs are saved.

Those ordinarily skilled in the art can appreciate that all or a part of the steps in the method according to the above embodiment can be performed by a program instructing relevant hardware. The program can be stored in a computer readable storage medium, and can include the following steps when executed:

A new message including message contents and service information is received;

It is checked whether a seed message of the new message is stored locally, where the seed message is a message with identical message contents to the new message;

If a seed message of the new message is stored locally, then an association relationship between the service information of the new message and the stored seed message is created;

If no seed message of the new message is stored locally, then the received new message is stored.

The storage medium as mentioned above includes a read-only memory, a magnetic disk, and an optical disk.

According to another embodiment of the present invention, a message storage method is provided. A flow chart of the method is as illustrated in Figure 2, and the method includes the following steps:

B1. A new message including message contents and service information is received.

In the embodiments of the present invention, the message includes two parts: message content and service information. The message content is actual information transmitted from a transmitter, and the service information represents various auxiliary communication parameters such as a service type, transmitter and receiver addresses of the message.

B2. It is checked whether a seed message is stored locally, and if it is stored, then the flow proceeds to step B3; otherwise, the flow proceeds to step B5.

B3. It is determined whether the new message and the locally stored seed message are matched in contents, and if the matching is successful, then the flow proceeds to step B4; otherwise, the flow proceeds to step B5.

A process of matching in contents the new message and the locally stored seed message includes the following steps:

Transmitter information matching and/or content digest matching and/or message title matching is performed.

It can be appreciated that the above content digest or title matching can further result in both conservation of processing resource and acceleration of the process although the messages can alternatively be matched in the embodiments of the present invention with full match of the message contents.

B4. An association relationship between the service information of the new message and the seed message is created.

In the present embodiment, the association relationship between the service information of the new message and the stored seed message is created particularly by creating an association relationship between the service information of the new message and a content identifier of the seed message, where the content identifier corresponds uniquely to the seed message.

It can be appreciated that the association relationship between the service information of the new message and the seed message can be created in various existing approaches, for example, by associating directly the new message and an address where the seed message is stored. It is emphasized in the present embodiment that the seed message can be located by the service information of the new message and furthermore the message contents thereof can be extracted in any specific approach without limiting the present invention.

In the embodiment of the present invention, only one copy of message contents is stored for a plurality of messages with identical contents from the same transmitter to different receivers while storing the service information of each of the messages respectively. In other words, the identical parts in the plurality of messages will not be stored repeatedly, but only one copy thereof is stored and an association relationship thereof with the plurality of various pieces of service information is created. The locally stored message for sharing among other messages is referred to as a seed message. This message storage approach thus can conserve greatly the storage space.

### B5. The received new message is stored.

In the present embodiment, after storing the received new message in step B5, the flow can further include the following step:

It is determined whether the message is qualified as a seed message, and if it is qualified, then the message serves as a seed message while generating a unique content identifier of the message.

In the embodiments of the present invention, various criterions can be set for determining whether the message is a seed message, where one or more of factors including an identity of the transmitter, a title of the message, a size of the message contents, a digest of the message, can be considered for an comprehensive analysis, and a specific analysis can be preformed in various existing approaches without limiting the present invention.

It can be appreciated that period of validity can be set for the seed message in the embodiments of the present invention, so that the service information associated with the seed message will be deleted upon expiration thereof. Thus, it can be ensured the system will not store excessive redundant trash information.

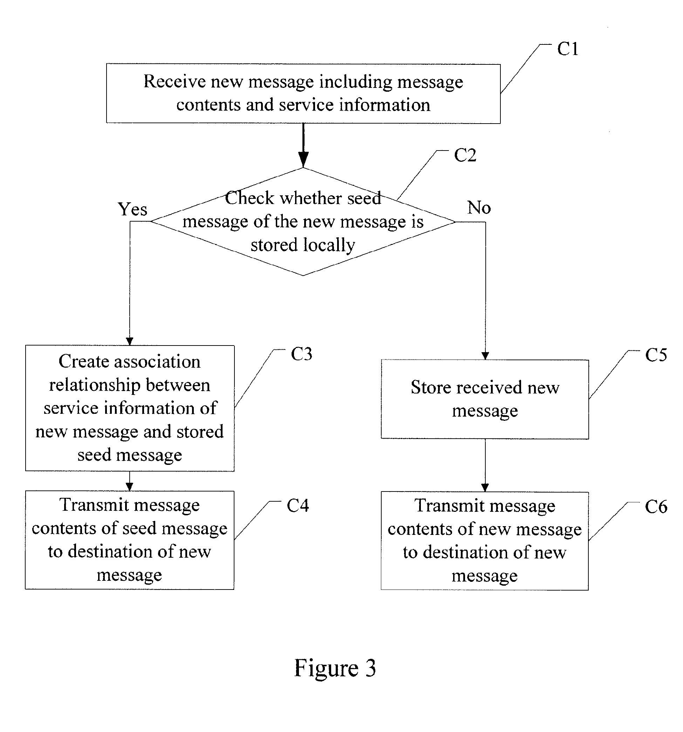

A message transmission method is further provided according to an embodiment of the present invention. A flow chart of the method is as illustrated in Figure 3, and the method includes the following steps:

C1. A new message including message contents and service information is received.

C2. It is checked whether a seed message of the new message is stored locally, and if it is stored, then the flow proceeds to step C3; otherwise the flow proceeds to step C5. The seed message is a message with identical message contents to the new message.

C3. An association relationship between the service information of the new message and the seed message, and the flow proceeds to step C4.

In the present embodiment, reference can be made to steps B2 to B4 in the previous embodiment for a process of creating an association relationship between the service information of the new message and the seed message.

C4. The message contents of the seed message are transmitted to a destination of the new message.

C5. The received new message is stored, and the flow proceeds to step C6.

C6. The message contents of the new message are transmitted to the destination of the new message.

The above embodiment provides a message transmission method which implements message transmission based upon the previous two embodiments.

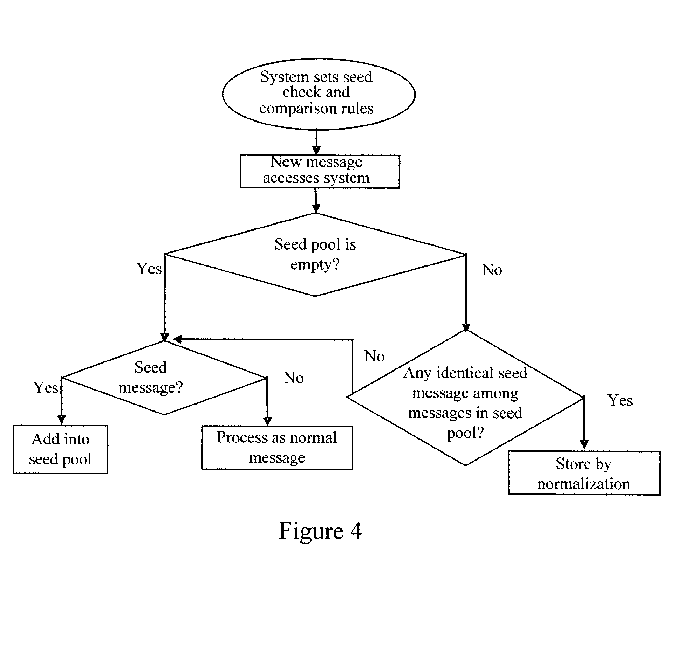

A message processing method is further provided according to another embodiment of the present invention. A flow chart of the method is as illustrated in Figure 4, and in the present embodiment, a message server sets seed selection and comparison rules which can be customized freely dependent upon a specific system implementation.

Firstly, the system finds based on the seed selection rule a submitted message which complies with the rule as a seed. The seed selection rule can include but will not be limited to conditions including a transmitter number, a title of the message, and whether the message is a seed can be determined from satisfaction of one or more of the conditions. The system stores the complete message contents and service information of the seed and generates a unique identifier for the message contents. Furthermore, the system can create a seed pool in which all seeds are stored with accompanying key data of each seed including the unique identifier of the message contents, the transmitter number, the title of the message, the size of the message, and the digest of the message. Particularly, the size of the message refers to the size of the message contents, and the digest of the message is generated from encryption of the message contents by the MD5 algorithm (or other similar algorithms). Then, the system searches all subsequently received messages for those identical to the seed according to the comparison rule. It is not necessary to store the message contents of those messages, but it is sufficient to store the respective service information which includes the unique identifier of the message contents. The seed comparison rule can include but will not be limited to a transmitter number, a title of the message, a size of the message contents, and a digest of the message.

A service processing flow is particularly as follows: D1. A new message accesses the system.

D2. It is checked whether the seed pool is empty, and if not, then the flow proceeds to step D3; otherwise, the flow proceeds to step D5.

D3. Comparison against the messages in the seed pool is made to determine whether there is a seed message with the identical message contents to the new message, and if there is, then the flow proceeds to step D4; otherwise, the flow proceeds to step D5.

D4. The new message is stored by normalization. The storage by normalization in the present embodiment associates the service information of the new message with the seed message with the identical message contents without storing the message contents part of the new message.

D5. It is checked whether the message newly accessing the system is a seed message, and if it is, then the flow proceeds to step D6; otherwise, the flow proceeds to step D7.

It can be appreciated that a check condition regarding the seed message has been preconfigured prior to the operation of the present flow, and repeated descriptions thereof will be omitted here.

### D6. The new message is added into the seed pool.

### ] D7. The new message is processed as a normal message.

An embodiment of the present invention will be further described hereinafter in an application of the methods according to the embodiments of the present invention to a specific service scenario (a weather forecast).

The embodiment of the present invention provides a message processing method in a specific scenario, and in the present embodiment, descriptions will be presented subsequently taking a Multimedia Messaging Service Center (MMSC) as an example for clarity and conciseness of the descriptions, which will apply in analogy to an implementation of other systems. In the present embodiment, Weather Forecast (a message title) of SP_A (a transmitter number) is preset as a seed object in the MMSC, so that the first message with the transmitter of SP_A and with the title of Weather Forecast arrived every day is deemed as a seed, service information and message contents are stored separately while generating a unique identifier of the message contents and generating and storing a digest from the message contents by an algorithm, e.g., as MD5.Subsequent message comparison can be made by any one or a combination of SP_A or the message title or the information digest. Any message in match is deemed as an identical message, and only the service information thereof (including the unique identifier of the message contents) is stored.

Stored data of any MMS message will be cleared upon expiration due to period of validity for the message. Therefore in order to ensure normal processing of all associated messages, the service information of the seed will be released as the period of validity elapses, and the message contents will be treated by the longest one of the periods of validity for the seeds. The stored message contents will be cleared at the end of the service for the last seed.

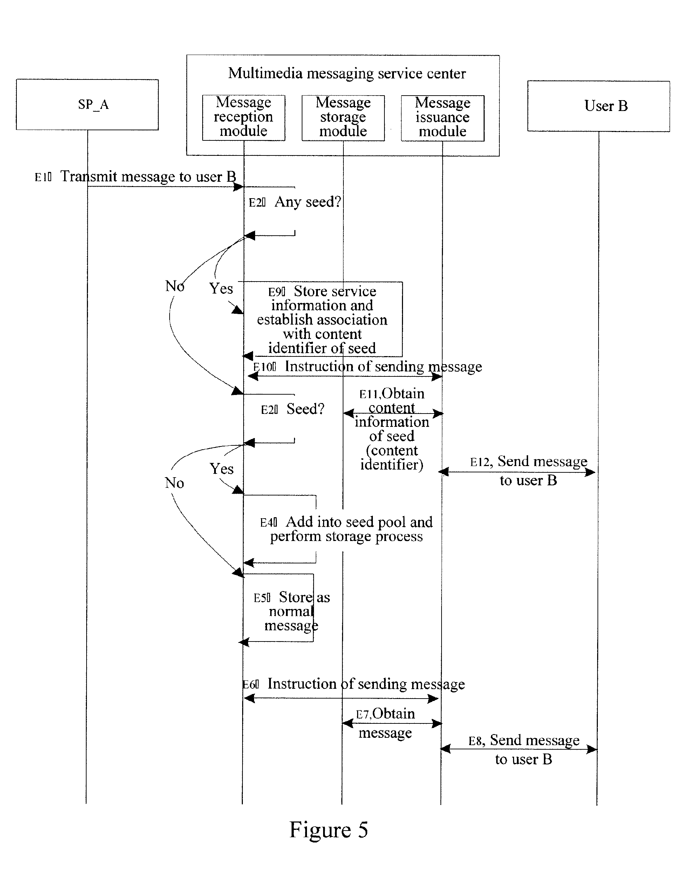

A signaling flow diagram is as illustrated in Figure 5 and includes:

E1. The SP_A transmits to the MMSC a message with a title of Weather Forecast and with a destination address being a user B.

E2. A message reception module of the MMSC receives the message and checks whether there is a seed in a seed pool for the message with the title of Weather Forecast; if not, the flow proceeds to step E3; otherwise, the flow proceeds to step E9.

E3. It is checked whether the received message is a seed, and if it is, the flow proceeds to step E4; otherwise, the flow proceeds to step E5.

It is checked whether the received message is qualified as a seed, in the present embodiment, possibly by the transmitter address (SP_A) and the message title in the message.

E4. The message is added into the seed pool and subjects to a storage process including storage of message contents and service information and generation of a unique content identifier, and the flow proceeds to step E6.

E5. The message is stored as a normal message, and the flow proceeds to step E6.

E6. A message sending module is instructed to send the message.

E7. The message sending module obtains the message from a message storage module.

If the message is a seed message, the message contents of the seed can be extracted from the seed pool by the generated content identifier.

E8. The message sending module sends the obtained message to the destination.

E9. The message reception module and the message storage module interact to store the service information of the message and to associate the service information and the content identifier of the currently stored seed message.

E10. After the message is stored, the message reception module instructs the message sending module to send the message.

E11. The message sending module and the message storage module interact to obtain the content information of the seed message by the content identifier.

E12. The message sending module sends the obtained contents to the destination.

In the embodiments of the present invention, the message can be stored, for example, in a magnetic disk.

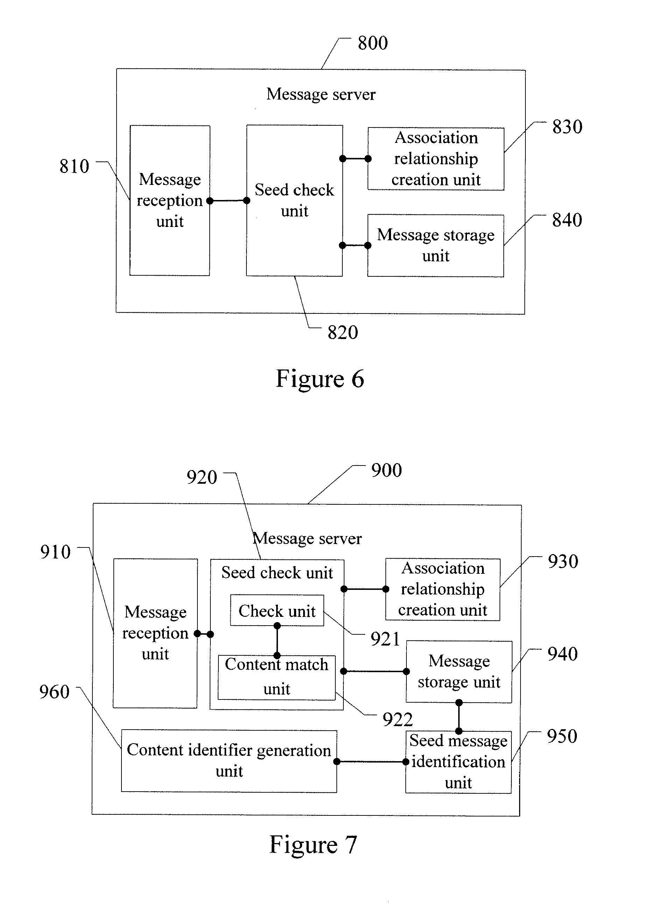

A message server is further provided according to an embodiment of the present invention. A schematic structural diagram of the message server is as illustrated in Figure 6, and the message server includes a message reception unit 810, a seed check unit 820, an association relationship creation unit 830 and a message storage unit 840.

The message reception unit 810 is adapted to receive a new message including message contents and service information.

The seed check unit 820 is adapted to check whether a seed message of the new message is stored locally, where the seed message is a message with identical message contents to the new message.

The association relationship creation unit 830 is adapted to create an association relationship between the service information of the new message and the seed message of the new message when the seed message is present as a result of the check by the seed check unit 820.

The message storage unit 840 is adapted to store the received new message when there is no seed message of the new message as a result of the check by the seed check unit 820.

A message server is provided according to another embodiment of the present invention. A schematic structural diagram of the message server is as illustrated in Figure 7, and the message server includes a message reception unit 910, a seed check unit 920, an association relationship creation unit 930, a message storage unit 940, a seed message identification unit 950 and a content identifier generation unit 960.

The message reception unit 910 is adapted to receive a new message including message contents and service information.

The seed check unit 920 is adapted to check whether a seed message of the new message is stored locally, where the seed message is a message with identical message contents to the new message.

The seed check unit 920 can include a check unit 921 and a content match unit 922.

The check unit 921 is adapted to check whether a seed message is stored locally, and to instruct the content match unit 922 to perform matching if a seed message is stored, or to instruct the message storage unit to store the received new message if no seed message is stored.

The content match unit 922 is adapted to match in contents the new message and the locally stored seed message, and to instruct the association relationship creation unit 930 to create an association relationship if the matching is successful, or to instruct the message storage unit 940 to store the new message, if the matching is not successful.

The association relationship creation unit 930 is adapted to create the association relationship between the service information of the new message and a seed message of the new message when the seed message is present as a result of the check by the seed check unit 920.

The message storage unit 940 is adapted to store the received new message when there is no seed message of the new message as a result of the check by the seed check unit 920.

The seed message identification unit 950 is adapted to determine whether the received new message is qualified as a seed message after the message storage unit 940 stores the new message, and to take the message as a seed message if the received new message is qualified as a seed message.

The content identifier generation unit 960 is adapted to generate a unique content identifier for the seed message.

It can be appreciated that the message server according to the present embodiment can further include a message transmission unit adapted to transmit the message contents of the seed message or the message contents associated with the service information of the stored new message to a destination of the new message.

The message storage method and the message transmission method and device according to the invention have been detailed as above, where:

In the message storage solution according to the embodiment of the invention, only one copy of identical message contents of a plurality of messages is stored while storing respectively the individualized information occupying a very small space. The individualized information and the message contents are linked by a unique identifier. Compared with respective storage of all messages for receivers of the messages in the prior art, according to embodiments of the present invention, storage capability of a message server memory can be improved, and an input and output load of the system can be lowered while saving hardware cost of the message server.

Those ordinarily skilled in the art can make variations in terms of specific implementations and application scopes in light of the embodiments of the invention, and accordingly, the disclosure of the descriptions shall not be taken in any way as limiting the present invention.

## Claims

1. A message storage method, comprising:
receiving a new message comprising message contents and service information;
checking whether a seed message of the new message is stored, wherein the seed message of the new message is a message with identical message contents to the new message; and
creating an association relationship between the service information of the new message and the stored seed message, if the seed message of the new message is stored; or
storing the received new message, if no seed message of the new message is stored.

2. The method according to claim 1, wherein the process of creating an association relationship between the service information of the new message and the stored seed message comprises:
creating the association relationship between the service information of the new message and a content identifier of the seed message which corresponds uniquely to the seed message.

3. The method according to claim 2, wherein the process of checking whether a seed message of the new message is stored comprises:
checking whether there is a seed message; and
matching in contents the new message and the stored seed message, if there is a seed message; and proceeding to the step of creating the association relationship between the service information of the new message and the seed message, if the matching succeeds; or proceeding to the step of storing the received new message, if the matching does not succeed; or
proceeding to the step of storing the received new message, if there is no seed message.

4. The method according to claim 3, wherein the process of matching in contents the new message and the stored seed message comprises:
performing at least one of transmitter information matching, content digest matching and message title matching.

5. The method according to any one of claims 1 to 4, wherein if no seed message of the new message is stored, then the method further comprises:
determining whether the new message is qualified as a seed message, and if it is qualified, then taking the new message as a seed message, and generating a unique content identifier of the seed message.

6. The method according to claim 5, further comprising: setting a period of validity for the seed message, and deleting the seed message and the service information associated with the seed upon expiration.

7. A message transmission method, comprising:
receiving a new message comprising message contents and service information;
checking whether a seed message of the new message is stored, wherein the seed message of the new message is a message with identical message contents to the new message; and
creating an association relationship between the service information of the new message and the seed message, and transmitting the message contents of the seed message to a destination of the new message, if there is a seed message of the new message; or
storing the received new message, and transmitting the message contents of the new message to the destination of the new message, if there is no seed message.

8. A message server, comprising a message reception unit, a seed check unit, an association relationship creation unit and a message storage unit, wherein
the message reception unit is adapted to receive a new message comprising message contents and service information;
the seed check unit is adapted to check whether a seed message of the new message is stored locally, wherein the seed message of the new message is a message with identical message contents to the new message;
the association relationship creation unit is adapted to create an association relationship between the service information of the new message and the seed message of the new message when the seed message is existent as a result of the check by the seed check unit; and
the message storage unit is adapted to store the received new message when there is no seed message of the new message as a result of the check by the seed check unit.

9. The message server according to claim 8, further comprising:
a seed message identification unit, adapted to determine whether the received new message is qualified as a seed message after the message storage unit stores the new message, and to take the new message as a seed message, if the received new message is qualified as a seed message; and
a content identifier generation unit, adapted to generate a unique content identifier for the new message which taken as the seed message.

10. The message server according to claim 9, wherein the seed check unit comprises:
a check unit, adapted to check whether a seed message is stored locally, and to instruct a content match unit to perform matching, if the seed message is stored; or to instruct the message storage unit to store the received new message, if no seed message is stored; and
the content match unit, adapted to match in contents the new message and the locally stored seed message, and to instruct the association relationship creation unit to create the association relationship, if the matching succeeds; or to instruct the message storage unit to store the new message, if the matching does not succeed.

11. The message server according to claim 10, further comprising: a message transmission unit, adapted to transmit the message contents of the seed message or the message contents associated with the service information of the stored new message to a destination of the new message.
